# EUROPEAN PATENT APPLICATION

(11) **EP 3 881 917 A1**
(43) Date of publication of application: **22.09.2021**
(21) Application number: 20163375.7
(22) Date of filing: 16.03.2020
(51) Int. Cl.: B01D 1/26, B01D 3/06

(54) **DISTILLATION MODULE AND MULTI-STAGE DISTILLATION APPARATUS**

(71) Applicant: Albakri, Sami Abdulrahman A., 64293 Darmstadt (DE)
(72) Inventor: Al-Bakri, Sami Abdulrahman, 64293 Darmstadt (DE); Abu Sharkh, Basel, Brookline, MA Massachusetts 02445 (US); Gülamber, Cemal, 06200 Yenimahalle, Ankara (TR)
(74) Representative: LifeTech IP Spies & Behrndt Patentanwälte PartG mbB

(57) **Abstract**

A system for producing shale oil (10) from a shale material (11) is disclosed. The system comprises at least one retort unit (110) configured to receive the shale material and to release retort gases and to produce spent shale; a condensation unit (120) configured to condense the shale oil from the retort gases and to provide at least one non-condensable gas included in the retort gases; and a combustion unit (130) configured to generate heat by combusting the at least one non-condensable gas and/or the at least one spent shale, wherein the generated heat is provided to the at least one retort unit (110) as energy source for releasing the retort gases from the shale material (11).

## Description

The present invention relates to a distillation module, a multi-stage distillation apparatus and a method for producing purified water.

### BACKGROUND

Fresh water is a fundamental need of humans and all living organisms. Each human needs to consume a minimum of about two liters per day. The water demand for cleaning, cooking, farming and industrial applications increases the average daily consumption of each human to more than 100 liters per day. Since about 97.5% of all water on Earth is salty and most of the fresh water is ice, the percentage of available fresh water for human consumption is very small.

There are some conventional methods for producing fresh water. One thermal method for purifying water is membrane distillation (MD), wherein water from a heated saline liquid stream is allowed to vaporize through a hydrophobic microporous membrane. A temperature difference across the two sides of the membrane leads to a vapor-pressure difference that causes water to evaporate from the hot side of the membrane and pass through the pores as vapor to the cold side. However, membrane distillation suffers from numerous disadvantages including susceptibility to membrane fouling, high membrane thermal conductivity and low membrane permeability leading to poor energy efficiency and low GOR (gain output ratio) compared to other desalination systems.

Another conventional water desalination process is known as multi-stage flash (MSF) distillation, wherein sea water is distilled by flashing a portion of the water first into steam and thereafter use multiple stages as essentially countercurrent heat exchangers, where the water distills at the cold sea water pipes and is collected thereafter. However, MSF systems usually require large scale infrastructure for the flash chambers.

Therefore, there is a demand to overcome drawbacks of membrane distillation as well as conventional multistage flash systems.

### SUMMARY OF THE INVENTION

At least some of the problems of the conventional systems are overcome by a system of claim 1 or a method of claim 15. The dependent claims refer to further advantageous realisations of the claimed subject matter.

The present invention relates to a distillation module for a multi-stage distillation apparatus that includes multiple distillation modules to produce purified water from a liquid. The module comprises a first chamber with an inlet for the liquid and a heat-coupling wall configured to enable a heat inflow from a heat source, and a second chamber including an outlet for collected the purified water after distillation and with a heat sink wall. The module further comprises a separation wall extending between the first chamber and the second chamber for thermally separating the first chamber and the second chamber. The separation wall comprises at least one opening to allow vapor to pass from the first chamber to the second chamber. The heat-coupling wall or the heat-sink wall is formed to allow a thermal coupling to a respective heat-sink wall or heat-coupling wall of an adjacent distillation module (when arranged in the distillation apparatus) to enable a monotonic temperature profile through the multiple distillation modules in the multi-stage distillation apparatus.

Optionally, the second chamber includes a thermally conducting filler material to support a condensation of the vapor passing through the opening of the separation wall.

Optionally, the first chamber includes capillary material to promote an evaporation of the liquid in the first chamber and to enable capillary feeding of the liquid into the first chamber.

Optionally, the first chamber further includes an outlet for allowing the liquid to flow into an adjacent distillation module of the multiple stage distillation apparatus.

Optionally, the at least one opening in the separation wall is formed in a region of the first chamber opposite to the inlet of the first chamber or in central region, or multiple openings are distributed over the separation wall.

Optionally, the first chamber and/or the second chamber includes a vent to enable exhausting of air from the first chamber. The vent may couple to a vacuum pump.

Optionally, the distillation module further comprises the heat source provided at the heat-coupling wall. The distillation module may optionally comprise a heat exchanger provided at the heat sink wall and being configured to transfer heat from the heat sink wall to a fluid. The fluid may be the liquid before providing it to the inlet of the first chamber.

Embodiments relate also to a multistage distillation apparatus comprising a plurality of distillation modules as defined before, which are arranged in direct contact to one another to form a stack of distillation modules. The direct contact is provided along the heat coupling wall and the heat sink wall of a subsequent distillation module and shall ensure a good thermal coupling.

Optionally, a first distillation module comprises a heat source for heating the first chamber of the first distillation module, and a last distillation module includes a heat exchanger configured to provide a cooling of the second chamber of the last distillation module. This will generate a heat flow from the heat source to the heat exchange and along the heat flow, heat can be used to evaporate vapor in each of the first chambers of each distillation module.

Optionally, adjacent distillation modules are connected by a fluid line connecting the inlet of the first chamber with an outlet of the first chamber of the adjacent distillation module. This may ensure that all first chambers will be provided with a constant inflow liquid so that a continuous operation can be ensured.

Optionally, at least some of the distillation modules are all connected to a common fluid line to enable a simultaneous feeding of the corresponding first chambers with the liquid.

Optionally, the outlets of all second chambers are connected with one another to provide a collecting conduit for the purified water.

Optionally, the distillation apparatus further comprises a pressure control unit for adjusting a pressure within the first chambers to control the distillation, wherein the pressure is controllable to drop monotonically in the adjacent distillation modules along or opposite to a temperature drop from a first distillation module to a last distillation module. The pressure control unit may include a vacuum pump configured to lower a pressure in the distillation modules.

Optionally, the pressure control is configured to adjust the pressure depending on the temperature in each first chamber to boil the liquid in at least some of the first chambers.

Optionally, the distillation apparatus further comprises a plurality of valves for controlling a liquid flow into one or more of the first chambers of the distillation modules. In addition, also the outflow of purified water through the outlets of the second chambers can be controlled (e.g. by valves or by a water level in the collecting conduit for purified water). In particular, it can be ensured that no air can get into the distillation modules through the outlets.

Optionally, the plurality of distillation modules are arranged as vertical stack or as a horizontal stack, wherein in the vertical stack the at least one opening of the separation walls are formed in a vertical upper portion of the first chambers. This will ensure a desired level of liquid in the first chambers.

Embodiments relate also to a method for producing purified water from a liquid in a distillation module as defined before. The method comprising:
- feeding liquid in the first chamber through the inlet;
- heating the heat-coupling wall;
- passing vapor through at least one opening from the first chamber to the second chamber;
- cooling the vapor in the second chamber by cooling the heat-sink wall; and
- collecting condensed water as purified water through the outlet of the second chamber.

In summary, embodiments related to a multi-stage thermal distillation apparatus and a method for multi-stage thermal distillation that overcome all three main disadvantages of membrane distillation. For example, the apparatus replaces the membrane by an impermeable thermally insulating wall that includes one or more opening(s) that allow vapor to move to a condensation chamber (second chamber) at the same pressure, but lower temperature than in the evaporation chamber (first chamber). The embodiments of the module, the apparatus and methods may include some or all of the elements, features and steps described before or later.

Although this type of cycle may have some similarities with the multistage flash desalination systems, the replacement of flash chambers with simple thermal distillation modules according to embodiments allows a more compact system. Therefore, embodiments have the advantage:
- of allowing a small-scale and off-grid desalination application, but nevertheless achieve a comparable performance as MSF;
- can operate at lower temperatures allowing the use of low temperature heat sources, for example, solar thermal energy;
- when compared to membrane purification processes such as reverse osmose (RO), MD or electrodialysis (ED), they tolerate complete dry-out of the membrane or have the ability for processing very-high-salinity brines and tolerate oily, fouling and difficult to process water streams;

- they are easily scalable;
- include the potential to utilize lower-strength and less-expensive materials;
- the lower temperatures result to lower potential of fouling.

### BRIEF DESCRIPTION OF THE DRAWINGS

Various embodiments of the present invention will be described in the following by way of examples only, and with respect to the accompanying drawings, in which:
- Fig. 1: is a schematic illustration of a stage module of a multi-stage thermal distillation apparatus according to an embodiment of the present invention.
- Fig. 2: is a schematic illustration of the first stage module of a multi-stage thermal distillation apparatus.
- FIG. 3A: is a schematic illustration of the multiple stages of the multi-stage thermal distillation apparatus with heat source and heat removal according to an embodiment.
- FIG. 3B: is a schematic illustration of a multi-stage thermal distillation apparatus according to another embodiment.
- Fig. 4: shows schematically a flow chart of a method for producing purified water from liquid.

### DETAILED DESCRIPTION

Various examples will now be described more fully with reference to the accompanying drawings, in which some examples are illustrated.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

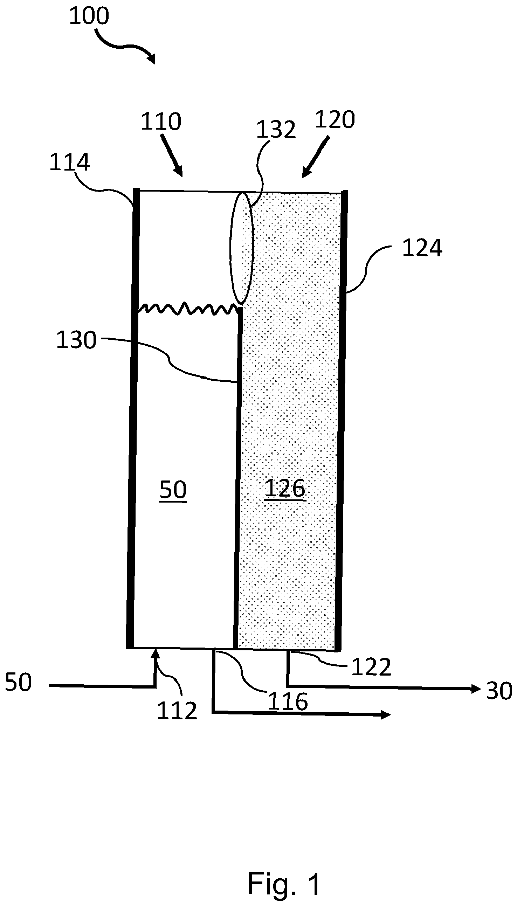

**Fig. 1** depicts a schematic view of a distillation module 100 according to an embodiment of the present invention. The depicted distillation module 100 is suitable to be used as a module within a multi-stage distillation apparatus in which multiple distillation modules 100 as shown in Fig. 1 are combined to produce purified water 30 from a liquid 50 (e.g. saline water, dirty or soiled water).

The distillation module 100 comprises a first chamber 110, a second chamber 120, and a separation wall 130. The first chamber 110 comprises an inlet 112 for the liquid 50 and a heat-coupling wall 114 configured to enable a heat inflow from a heat source 70 (not shown in Fig. 1). The second chamber 120 includes an outlet 122 for collected the purified water 30 after distillation and a heat sink wall 124. The separation wall 130 extends between the first chamber 110 and the second chamber 120 for thermally separating the first chamber 110 and the second chamber 120 and comprises at least one opening 132 to allow vapor to pass from the first chamber 110 to the second chamber 120.

The liquid 50 is, in particular, a saline water (e.g. sea water) which is introduced in the first chamber 110 of the distillation module 100. The liquid 50 is separated from the second chamber 120 by the separation wall 130, because in the depicted vertical arrangement the opening 132 is formed in a vertical upper position (above against gravity) of the distillation module 100, wherein the vertical direction is defined as the direction along gravity so that the liquid 50 may fill up the space between the separation wall 130 and the heat coupling wall 140, but does not flow through the opening 132. Fig. 1 shows the maximally filled state. Of course, less liquid 50 can also be filled in the first chamber 110.

In addition, the second chamber 120 includes a filler material 126 which is configured to promote the condensation of vapor that passes from the first chamber 110 through the opening 132 into the second chamber 120. For this, the filler material 126 may, for example, comprise a metal or any other thermally-conducting material that couples to the heat sink wall 124. Because the temperature at the heat sink wall 124 is, in operation, lower than the temperature at the heat source wall 114, vapor generated in the first chamber 110 will condense in the second chamber 120 at the filler material 126 due to the lower temperature. The filler material 126 may be formed as a mesh or folded mesh or wire mesh and should have a direct contact to the heat sink wall 126. For example, the filler material 126 maybe pressed into the second chamber 120 so that the filler material exerts a pretension on the heat sink wall 126, thereby ensuring a good thermal contact.

The distillation module 100 further comprises an outlet 116 at the first chamber 110 which enables to connect the distillation module 100 in a serial connection with multiple distillation modules 100a, 100b, ... so that the liquid 50 can be exchanged between the combined distillation modules 100. Furthermore, the purified water 30 maybe collected from the second chambers 120 of the combined distillation modules 100.

The heat coupling wall 114 and heat sink wall 124 may, for example, comprise a material of high thermal conductivity such as a metal in order to promote a heat transfer into the heat coupling wall 114 and from the heat sink wall 124. In addition, the distillation module 100 may have a shape in the form of a rectangular container, e.g. in the cross-section through the heat coupling wall 114, the separation wall 130 and the heat sink wall 124. Thus, the heat coupling wall 114 and the heat sink wall 124 may be flat (planar) to enable an efficient thermal coupling to adjacent distillation modules 100.

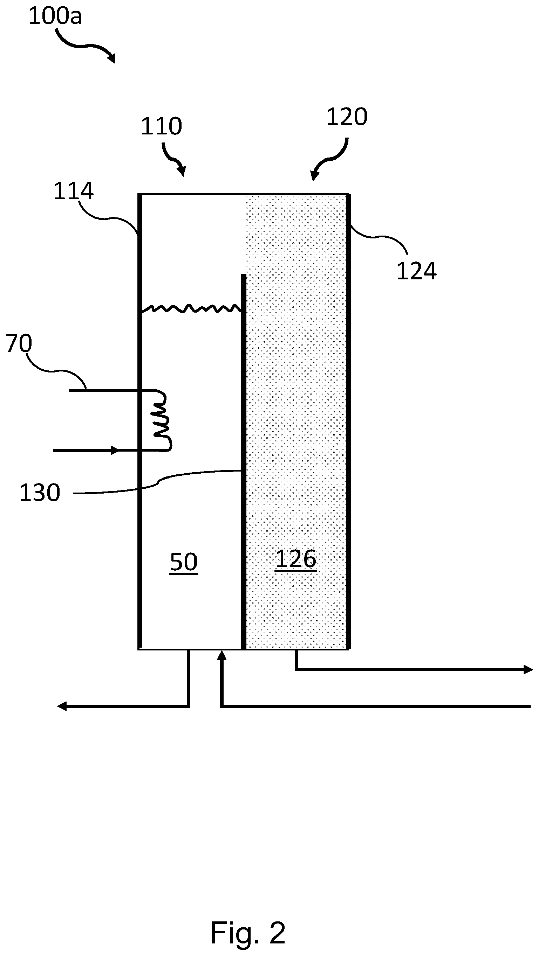

**Fig. 2** depicts a distillation module 100a as it is can be arranged at outer side position of the multi-stage distillation apparatus (e.g. on the left-hand side). It may be the first distillation module 100a with the highest temperature, but it may also be used as a standalone distillation module 110a. In this embodiment the first chamber 110 includes a heat source 70 that heats up the liquid 50 in the first chamber 110 to promote the vaporization on the liquid 50.

The heat source 70 may be an electric heating, a fluid heater (by hot water e.g.), a gas heater or a heat pipe, but may also be formed as solar heating system. For example, solar power can directly be irradiated on the heat coupling wall 114 to increase the temperature of the heat coupling wall 114. To foster this, it may comprise a heat absorption material.

All other components can be built in the same way as in the embodiment of Fig. 1 so that a repeated description is not needed.

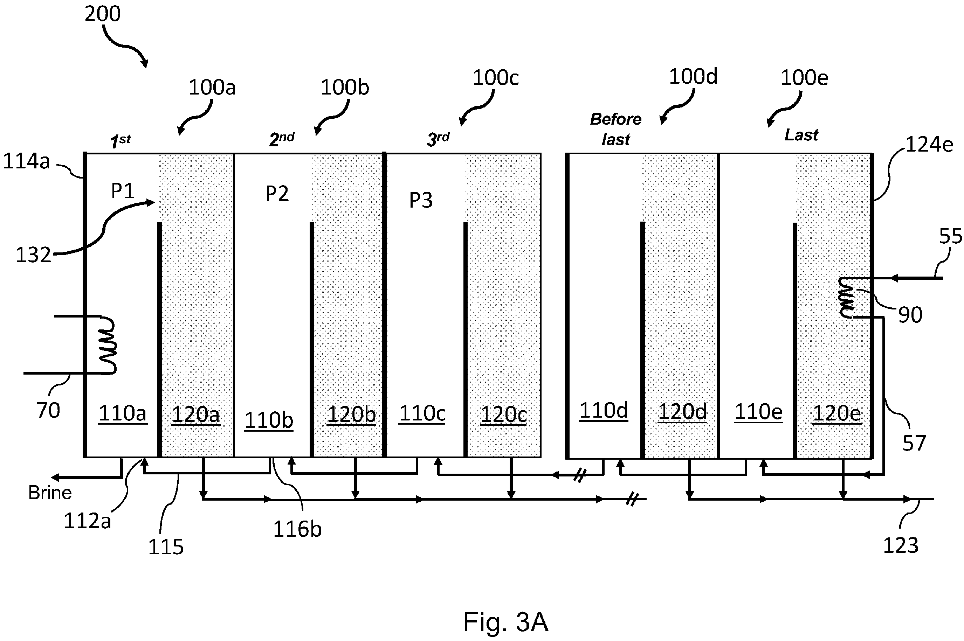

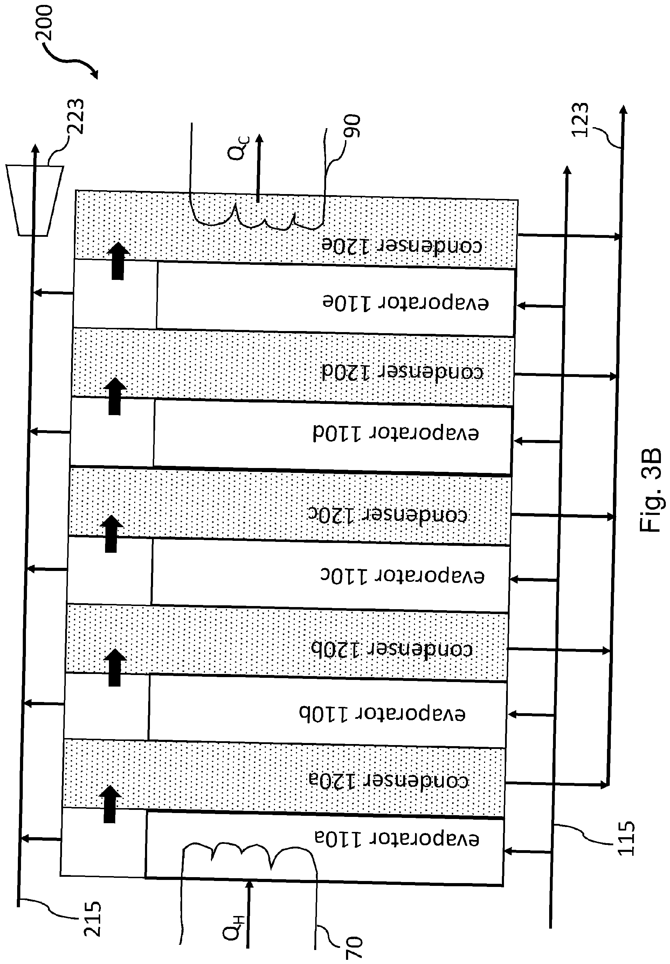

**Fig. 3** **A** depicts a multi-stage distillation apparatus 200 according to another embodiment of the present invention. The multi-stage distillation apparatus 200 comprises multiple distillation modules 100a, 100b, ... which are arranged as a stack of distillation modules 100. They may be stacked horizontally or vertically. For a vertical stack of distillation modules 100a, 110b, ... (e.g., rotated 90 degrees or at other orientations), the first distillation module 100a with the highest temperature can be arranged at a vertical lower position, whereas the distillation module 100e with the lowest temperature can be arranged at the vertical highest position. This may promote the heat flow from the bottom to the top.

The at least one opening 132 in the separation walls 130 can be formed differently for horizontal stacking (see Fig. 3) or vertical stacking (rotated about 90°). For horizontal stacking, the at least one opening 132 may be formed in a region of the first chamber 110 opposite to the inlet 112 of the first chamber 110 (vertically above) to keep the liquid 50 in the first chambers 110. For a vertical stacking, the at least one opening 132 may be formed in any region in the separation wall 130, or multiple openings 132 may be distributed over the separation wall 130. However, it is of advantage if there are not too many openings 132 formed, because otherwise it may become difficult to maintain a desired temperature drop between the first chamber 110 and the second chamber 120, which is needed for the condensation process.

Each internal the distillation module 100b, 100c, ... can be formed in the way as depicted in Fig. 1. In the horizontal stack as shown in Fig. 3, the distillation module 100a with the heat source 70 (i.e. with the highest temperature during operation) can formed as shown in Fig. 2 and may be arranged on the left-most position (or mirrored on the right-most position). Opposite to the first distillation module 100a with the heat source 70, the last distillation module 100e on the other side comprises an additional a heat exchanger 90 which is configured to lower the temperature in its second chamber 120e. The heat exchanger 90 may, for example, be formed to use the liquid 50 as a cooling medium to cool down the second chamber 120e, namely before it will be introduced into the first chambers 110. For example, conduits with the liquid 50 may extend into the second chamber 120e (e.g. in a spiral way).

The multi-stage thermal distillation apparatus 200 further includes a source of liquid feed 55 and a liquid-feed conduit 57 extending from the source of liquid feed 55, a liquid-permeate extraction conduit 123 (e.g. a collecting conduit for purified water). According to further embodiments, one or more further heat exchangers may be provided along the collecting conduit 123 downstream the outlets 122 to extract heat and use this heat, for example, to increase the temperature of the liquid 50 before it is fed into the inlets 112 of the first chambers 110. The outer-most walls 114a, 124e of the combination of multiples modules 100a, ..., 110e may also couple to the surroundings to ensure the heat flow, for example, in the direction from the left-hand side to the right-hand side in Fig. 1. It may also be possible that the heat sink wall 124e may be submerged in the liquid 50.

Furthermore, the plurality of distillation modules 100a, 100b, ... are connected with fluid lines 115 that provide a connection for the liquid 50 to enable a fluid connection between adjacent first chambers 110a, 110b so that a same liquid level can be arranged in all first chambers 110a, 110b, .... However, this flow may also be controlled through one or more valves (not shown). These valves can be used to adjust a level in each of the first chambers 110a, 110b, .... For example, if the evaporation is faster than the liquid supply, the level will lower in the respective first chamber. Thus, dependent on the temperature drop across the distillation apparatus 200, the level the liquid can be adjusted as desired. In particular in the vertical stack arrangement, this levelling through a controlled liquid supply can be important to avoid an overflow in the lowest distillation module 100a.

Optionally, at least one vacuum unit is provided to lower the pressures P1, P2, P3, ... in each of the first chambers 110a, 110b, .... This is of advantage, because a lower pressure will increase the vaporization of the liquid 50 and thus promotes the distillation process. According to embodiments, the pressures may or may not constant along the stack of distillation modules 100a, 100b, .... For example, a pressure profile may be formed in the plurality of first chambers 110a, 110b, ... such that the pressures P1, P2, P3, ... will monotonically change from the one first chamber 110a to a subsequent first chamber 110b and so on. For example, the pressures can be adjusted so that: P1≥P2≥P₃≥ ... or P1≤P2≤P₃≤.... This monotonic change may have the same direction as the temperature drop from the first distillation module 100a to the last distillation module 100e. For example, the first chamber 110e with the lowest temperature may have the lowest pressure to compensate the reduced evaporation due to the lower temperature when compared to the first chamber 110a with the highest temperature. According to further embodiments, the pressure may also increase from the first distillation module 100a to the last distillation module 100e. For example, the high saline concentration in the first distillation module 110a may slow down the evaporation, which again can be compensated by the lower pressure. Therefore, depending on the concrete situation (temperatures, saline concentration etc.) the pressures can be adjusted as desired. Embodiments allow adjustments to any of the possible situation to allow a most efficient distillation.

It is of particular advantage if the heat and the pressures P1, P2, ... are adjusted such that the liquid 50 is boiling in each of the first chambers 110a, 110b, ... , which will maximize the efficiency of the distillation. Therefore, according to embodiments, the pressures and/or temperatures and/or the supply of liquid 50 are controlled to bring the liquid 50 in each or most of the first chambers 110 as close as possible to the boiling state. This controlling may be optimized by taking into account the needed energy for this control.

According to further embodiments, the first chambers 110 can be filled with capillary material. In this case, the liquid 50 need not be pumped to the distillation modules 100, but the liquid 50 may be fed to each first chamber 110 (evaporators) by capillary action. The capillary material can be washed occasionally with feed water to remove accumulated brine.

**Fig. 3B** depicts a multi-stage distillation apparatus 200 according to yet another embodiment of the present invention. In this embodiment the vacuum pump 223 is shown, which is configured to pump via a vacuum line 215 the air out of the first and second chambers 110, 120. Valves may or may not be provided to control the air flow out of the distillation modules 100. As in the embodiment of Fig. 3A, heat QH is provided through the heat source 70 on one side and, on the other side, a heat exchanger 90 transfers the remaining heat Qc out of the multi-stage system 200. The liquid 50 may again be heated through the heat exchange 90 before it is fed to the liquid line 115.

The optionally applied vacuum enhances the evaporation process in each evaporation stage (distillation module 100), but it is not necessary. The multistage evaporation can also proceed without applying vacuum. Vacuum may also be applied selectively to some distillation modules 100.

This multi-stage distillation apparatus 200 differs from the embodiment of Fig. 3A in that the fluid line(s) 115 are not connecting subsequent modules 100, but all distillation modules 100 in parallel. In this embodiment all first chambers 110 (evaporators) are connected to a common liquid line 115. In other words, the distillation modules 100 are connected in the embodiment of Fig. 3A in serial and in Fig. 3B in parallel. Hence, each evaporation stage 100 is fed with the same feed water.

The liquid 50 (e.g. water) can be fed by a pump or through capillary action through by a material that fills the first chamber 110 (evaporators). Heat is absorbed again from the heat source 70 in the first evaporator stage 110a and is used to evaporate the liquid 50. Water vapor passes to the second chamber 120a (condenser stage), where it is cooled by liquid fed to the second evaporator stage 110b. Feed liquid in the second stage 100b absorbs heat released by the condenser 120a in the previous stage 100a. The process is repeated for n stages.

The liquid 50 (feed water) can be supplied and removed from each evaporation stage 100 continuously or in batch mode. In a batch mode operation, the liquid 50 will be maintained in each evaporation stage for as long as needed to achieve a certain brine concentration.

According to further embodiments, sensible heat can be recovered from the concentrated brine of each distillation module using a single or plural of heat exchangers that exchange heat between the brine and feed water.

According to further embodiments, the liquid 50 can again be used as the heat sink in the last condenser stage 120e.

The source of heat can be renewable or non-renewable energy.

According to further embodiments, before filling the first chambers 110a, 110b, ... with the liquid 50, all first chambers 110a, 110b, ... may be evacuated to generate a low-pressure in all first chambers 110a, 110b, .... Thereafter, the liquid 50 will be filled in all first chambers 110.

Next, the temperature will be increased on the left-hand side by the heat source 70 so that the evaporation may start in the first chamber 110a of the first distillation module 100a, which will decrease the fluid level in this first chambers 110a. However, since the first chamber 110a is connected with the first chamber 110b of the second distillation module 100b, the liquid 50 from the second distillation module 100b will flow into the first distillation module 100a. If, however, the flow rate is controlled by the exemplary valves arranged along the fluid line 115, the level of liquid 50 may be controlled differently in the separate first chambers 110a, 110b, ....

Moreover, the pressures P1, P2, ... may also be controlled by using vents provided at one of more distillation modules 100 and which are connected to a vacuum pump in order to pump out the air out of the distillation modules 100. However, during operation, the vacuum pump may not be used to control the pressure profile along the stack of distillation modules 100, but instead the pressures P1, P2, P3, ... can be controlled by controlling the flow of the liquid 50 when passing from one distillation module 100a an adjacent distillation module 100b.

As mentioned before, the heat coupling walls 114 and the heat sink walls 124 may be formed as plain walls which can directly contact each other without any air gap therebetween. However, according to a further embodiment, also a ring-shaped distillation apparatus 200 is possible. For example, the heat source 70 may be arranged in the center of the ring-shaped distillation apparatus 200 to heat up an angular-shaped first chamber 110a of the first distillation module 100a. Around this ring-shaped first distillation module 100a further angular-shaped distillation modules 100b, 100c, ... are arranged concentrically so that the whole distillation apparatus 200 represents a concentric arrangement of plural distillation modules 100a, 100b, ... , wherein the last angular-shaped distillation module 100e enables a heat transfer to the outer side, again by a heat exchanger 90.

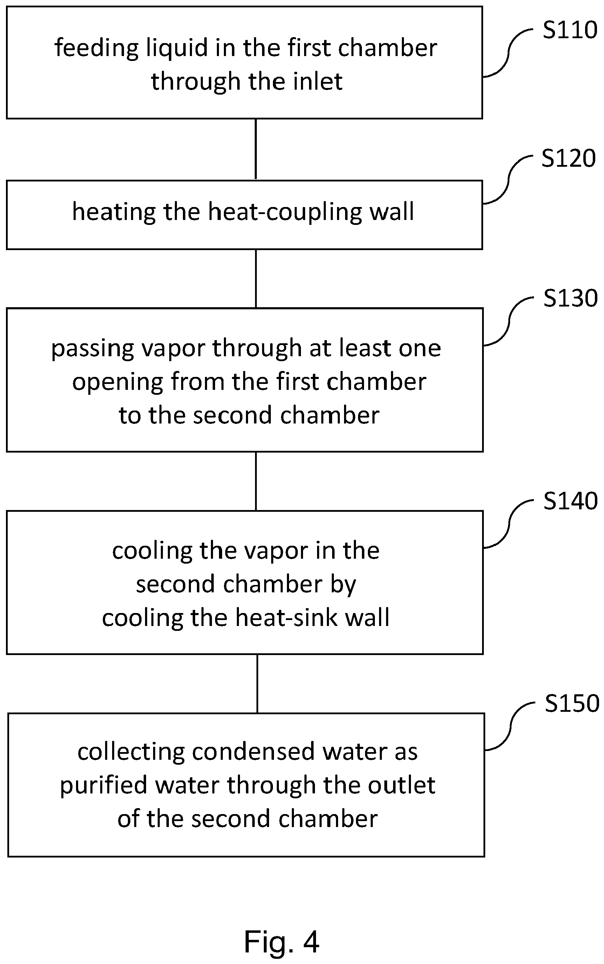

**Fig. 4** depicts a flow chart for a method for producing purified water 30 from a liquid 50 in a distillation module 100 as defined before. The method comprises:
- feeding S110 liquid in the first chamber 110 through the inlet 112;
- heating S120 the heat-coupling wall 114;
- passing S130 vapor through at least one opening 132 from the first chamber 110 to the second chamber 120;
- cooling S140 the vapor in the second chamber 120 by cooling the heat-sink wall 124; and
- collecting condensed water as purified water 30 through the outlet 122 of the second chamber 120.

Embodiments of the multi-stage thermal distillation apparatus 200 can be summarized as follows (see also Fig. 3):
Each of the plurality of purification stages 100a, 100b, ... respectively includes:
- a thermal distillation module including the feed inlet 112 in fluid communication with the source of liquid feed 55,
- the impermeable, thermally insulating wall 130 included in the vacuum thermal distillation module 100,
- a feed-liquid containment chamber 110 for including liquid feed 50 from the feed inlet 112, wherein the feed-liquid containment chamber 110 is positioned on one side of the impermeable, thermally insulating wall 130 and is in fluid communication with the feed inlet 112,
- a vapor-condensation chamber 120 for condensing vapor permeated from liquid feed through the impermeable, thermally insulating wall 130, wherein the vapor-condensation chamber is positioned on an opposite side of the impermeable, thermally insulating wall 130 from the feed-liquid containment chamber 110.

The vapor condensation chamber 120 is configured to condense the vapor permeate and includes a heat conducting wall (heat sink wall) 124 positioned opposite from the impermeable thermally insulating wall 130 and is filled with a heat conducting filler 126 to maximize the condensation surface area.

The vacuum source(s) is in fluid communication with and configured to establish a reduced pressure P1, P2, ... in the vacuum distillation modules 100. In a method for distillation of a feed liquid 50, portions of the feed liquid 50 are passed through heat exchangers 90 to condense vapor from the last stage 100e, extract heat from the condensate and extract heat from the brine removed from the first stage 100a. Brine is removed from the first stage 110a. However, brine can possibly be removed from the liquid containment chamber 110 of any distillation stage 100a, 100b, ... and feed can be fed to the liquid containment chamber 110 of any stage 100a, 100b, ....

A flow of feed liquid 50 (e.g., sea water at 27°C.) is fed from a source and split into respective portions that pass through the condenser 120e of the last stage 100e and possibly a heat exchanger 90 with the brine and/or the distillate. The preheated feed stream (conduit 57) is fed to the liquid containment chamber 110e of the last vacuum thermal distillation stage module (module 100e) where it receives heat from the before last vacuum thermal distillation stage (stage 100d) and a portion of the solvent 50 evaporates. The vapor travels from the liquid containment chamber 110e through an opening 132 in the impermeable, heat insulating wall 130 to a condensation chamber 120e filled with a heat conducting filler 126 where it condenses after cooling it by the feed stream or a portion of it and is removed as distillate (in collecting conduit 123). The brine in the liquid containment chamber 110e in the last stage is fed to the liquid containment chamber 110d of the before last thermal distillation module (module 100d), where it receives heat from condensing the vapor in the stage before it and flashes to create vapor that travel to the vapor condensation chamber 120d. The vapor condenses and creates a distillate that is removed from the stage (in collecting conduit 123) and the latent heat is transferred to the brine contained in the liquid containment chamber 110 in stage 100d.

The process is repeated multiple times until brine is fed from the second stage 100b to the to the liquid containment chamber 110a of the first stage 100a. The brine in this stage is heated by the heat source 70. The vapor produced from the evaporation of brine in the first stage 100a is transferred to a condensation chamber 120a of the first stage 100a, where it condenses forming distillate and transferring heat through a heat conducting wall 130 to the liquid containment chamber 110b of the second stage (module 100b). Concentrated brine is removed from the first stage 110a. Heat is recovered from the distillate and concentrated brine through single or plurality of heat exchangers to enhance process thermal efficiency. Pressure P is adjusted in each stage using vacuum pumps to adjust for boiling point elevation and temperature to guarantee flashing of the liquid in each stage.

Advantages of embodiments relate also to the following subject matters:
A multi-stage thermal distillation apparatus, comprising: a source of liquid feed 50 and a plurality of purification stages 100 including at least a first purification stage 100a configured to receive liquid feed 50 from a second purification stage 100b configured to receive liquid feed 50 from the third purification stage, each purification stage respectively including:
a distillation module 100 with at least one of the following:
- a feed inlet 112 in fluid communication with the source of liquid feed 50 to the stage;
- an impermeable, thermally insulating wall 130 contained in the vacuum thermal distillation module;
- a feed-liquid containment chamber 110 for containing liquid feed 50 from the feed inlet 112, wherein the feed liquid containment chamber 110 is positioned on one side of the impermeable, thermally insulating wall 130 and is in fluid communication with the feed inlet 112, wherein the feed liquid containment chamber 110 contains a vapor space connected to a vapor permeate condensation chamber 120;
- a vapor-permeate condensation chamber 120 for containing and condensing vapor permeated from the feed-liquid containment chamber 110 through an opening 132 in the impermeable, thermally insulating wall 130, wherein the vapor-permeate-condensation chamber 120 is positioned on an opposite side of the impermeable, thermally insulating wall 130 from the feed-liquid containment chamber 110.

The vapor-permeate condensation chamber 120 may be configured to condense the vapor permeate and including (a) a vapor-permeate inlet in fluid communication with the vapor-permeate opening 132 in the impermeable thermally insulating wall 130 and (b) a condensed liquid-outlet 124 through which condensed liquid permeate 30 can be removed from the condensation chamber 120. Heat may be removed from the vapor in the second and subsequent purification stages through a heat conducting wall 114 opposite to the impermeable thermally insulating wall 130; and wherein heat removed from the condensation chamber 120 through the heat conducting wall 124 is transferred to liquid containment chamber 110 in a subsequent purification stage 100b and wherein, heat removed from the last purification stage 100e is removed by a cooling medium.

The heat source 70 may be configured to heat liquid in the liquid containment chamber 110a in the first purification stage 100a. At least one liquid-remainder conduit may be configured to provide fluid communication from the first-liquid containment chamber 110 in the vacuum thermal distillation module of the first purification stage 100a to the feed-liquid containment chamber 110b in the vacuum thermal distillation module of the second purification stages 100b.

A plurality of regulators in fluid communication with and configured may be arranged to establish a first reduced pressure P1 in the first purification stage 100a, a second reduced pressure P2 in the second purification stage 100b that is higher than the first reduced pressure P1.

In the multi-stage thermal distillation apparatus, the source of liquid feed 50 may include liquid feed comprising water and dissolved components.

In the multi-stage thermal distillation apparatus 200, each of the purification stages 100 may further include a liquid-condensate extraction conduit 123 including a plurality of liquid-condensate inlets, wherein each is respectively in fluid communication with the liquid condensate outlet of the condensation chamber 120 of a respective purification stage 100. The liquid-condensate extraction conduit 123 may be configured to pass condensed liquid 30 from the liquid-condensate inlets through liquid-liquid heat exchangers to extract heat from them.

The multi-stage thermal distillation apparatus 200 may further comprise a liquid-condensate receptacle coupled with the liquid-condensate extraction conduit 123 and configured to collect liquid condensate 30 passed through the liquid-liquid heat exchangers.

The multi-stage thermal distillation apparatus 200 may further comprise a heat source 70 configured to heat liquid 50 in the first liquid containment chamber 110a in the vacuum thermal distillation module 100a of the first stage.

In the multi-stage thermal distillation apparatus 200, the vapor condensation chamber 120 in all stages may be filled with thermally conducting filler 126 that increases the surface area for condensing the vapor flowing from the liquid containment chamber 120.

A method for distillation of a feed liquid may comprise the steps of:
- passing portions or all of the feed liquid 50 through heat exchangers 90 to remove heat;
- condensing vapor from the last purification stage 100e;
- possibly passing portions of the preheated feed through heat exchangers to remove heat from the condensate 30 extracted from one or multiple stages.

In the method, the permeates from all stages may comprise water.

In the method, the water 30 may be collected after passing through the feed heat exchangers.

In the method, the pressure in the second purification stage 100b may be at least 1 kPa higher than the pressure in the first purification stage 100a.

In the method, the pressure P2 in the second purification stage 100b may be no more than 20 kPa higher than the pressure P1 in the first purification stage 100a.

In the method, the pressure P2 in the second purification stage 100b may be at least 3 kPa lower than the pressure P1 in the first purification stage 100a.

The method may further comprise: injecting the further concentrated remnant of the feed liquid 50 from the last purification stage 100e into a previous feed-liquid containment chamber 110d of a before-last vacuum thermal distillation module 100d, wherein the temperature in the last feed-liquid containment chamber 110e may be at least 1° C lower than the temperature in the before last feed-liquid containment chamber 110d.

The method may further comprise: removing brine from the first liquid feed containment chamber 110a through a liquid brine conduit.

The method may further comprise: transferring heat from a resulting brine of remaining feed liquid to the feed liquid 50 before the feed liquid is fed to the last purification stage 100e.

In the method, partial feed liquid may be fed to the liquid containment chamber 110 of any stage 100.

In the method, brine may be extracted from the liquid containment chamber 110 in any purification stage 100.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realised in other embodiments. Such combinations are covered by the disclosure herein unless it is stated that a specific combination is not intended.

### List of reference signs

- 30: purified water (e.g. condensed liquid permeate)
- 50: liquid or liquid feed (e.g. saline water)
- 55: reservoir for liquid
- 57: conduit for preheated liquid
- 70: heat source
- 90: heat exchanger
- 100: distillation module
- 110: first chamber (e.g. liquid containment chamber)
- 112: inlet for the liquid
- 114: heat-coupling wall (e.g. a heat conducting wall)
- 115: fluid line
- 116: outlet of first chamber
- 120: second chamber (e.g. vapor condensation chamber)
- 122: outlet for collected the purified water
- 123: collecting conduit for purified water
- 124: heat sink wall (e.g. a heat conducting wall)
- 126: filler material
- 130: separation wall (e.g. impermeable thermally insulating wall)
- 132: at least one opening
- 200: multi-stage distillation apparatus
- 215: vacuum line
- 223: vacuum pump

## Claims

1. A distillation module (100) for a multi-stage distillation apparatus (200) that includes multiple distillation modules (100) to produce purified water (30) from a liquid (50), the module (100) comprising:
a first chamber (110) with an inlet (112) for the liquid (50) and a heat-coupling wall (114) configured to enable a heat inflow from a heat source (70);
a second chamber (120) including an outlet (122) for collected the purified water (50) after distillation and a heat sink wall (124);
a separation wall (130) extending between the first chamber (110) and the second chamber (120) for thermally separating the first chamber (110) and the second chamber (120), the separation wall (130) comprising at least one opening (132) to allow vapor to pass from the first chamber (110) to the second chamber (120),
wherein the heat-coupling wall (114) or the heat-sink wall (124) is formed to allow a thermal coupling to a respective heat-sink wall or heat-coupling wall of an adjacent distillation module to enable a monotonic temperature profile through the multiple distillation modules (100) in the multi-stage distillation apparatus (200).

2. The distillation module (100) according to claim 1, wherein
the second chamber (120) includes a thermally conducting filler material (126) to support a condensation of the vapor passing through the opening (132) of the separation wall (130); and/or
the first chamber (110) includes capillary material to promote an evaporation of the liquid (50) in the first chamber (100) and to enable capillary feeding of the liquid (50) into the first chamber (110).

3. The distillation module (100) according to claim 1 or claim 2, wherein the first chamber (110) further includes an outlet (116) for allowing the liquid (50) to flow into an adjacent distillation module of the multiple stage distillation apparatus (200).

4. The distillation module (100) according to one of the preceding claims, wherein the at least one opening (132) in the separation wall (130) is formed in a region of the first chamber (110) opposite to the inlet (112) of the first chamber (110) or in central region or multiple openings (132) are distributed over the separation wall (130).

5. The distillation module (100) according to one of the preceding claims, wherein the first chamber (110) and/or the second chamber (120) includes a vent to enable exhausting of air from the first chamber (110).

6. The distillation module (100) according to one of the preceding claims, further comprising at least one of the following:
the heat source (70) provided at the heat-coupling wall (114);
a heat exchanger (90) provided at the heat sink wall (124) and being configured to transfer heat from the heat sink wall (124) to a fluid, in particular to the liquid (50) before providing it to the inlet (112) of the first chamber (110).

7. A multistage distillation apparatus (200) comprising:
a plurality of distillation modules (100a, 110b, ...) according to one of the preceding claims, where the distillation modules (100a, 110b, ...) are arranged in direct contact to one another to form a stack of distillation modules (100a, 100b, ...),
wherein the direct contact is provided along the heat coupling wall (114) and the heat sink wall (124) of a subsequent distillation module (100a, 110b).

8. The distillation apparatus (200) according to claim 7,
wherein a first distillation module (100a) comprises a heat source (70) for heating the first chamber (110a) of the first distillation module (100a), and
wherein a last distillation module (100e) includes a heat exchanger (90) configured to provide a cooling of the second chamber (120e) of the last distillation module (100e).

9. The distillation apparatus (200) according to claim 7 or claim 8, wherein
adjacent distillation modules (100a, 100b) are connected by a fluid line (115) connecting the inlet (112a) of the first chamber (110a) with an outlet (116b) of the first chamber (110b) of the adjacent distillation module (100b); or
at least some of the distillation modules (100a, 100b, ...) are all connected to a common fluid line (115) to enable a simultaneous feeding of the corresponding first chambers (110a, 110b, ...) with the liquid (50).

10. The distillation apparatus (200) according to one of claim 7 to 9, wherein the outlets (122) of all second chambers (120) are connected with one another to provide a collecting conduit (123) for the purified water (30).

11. The distillation apparatus (200) according to one of claims 7 to 10, further comprising a pressure control unit for adjusting a pressure within the first chambers (110a, 110b, ...) to control the distillation, wherein the pressure (P) drops monotonically in the adjacent distillation modules (100a, 100b, ...) along or opposite to a temperature drop from a first distillation module (100a) to a last distillation module (100e).

12. The distillation apparatus (200) according to claim 11, where the pressure control is configured to adjust the pressure depending on the temperature in each first chamber (110a, 110b, ...) to boil the liquid (50) in at least some of the first chambers (110a, 110b, ...).

13. The distillation apparatus (200) according to one of claims 7 to 12, further comprising a plurality of valves for controlling a liquid flow into one or more of the first chambers (110a, 110b, ...) of the distillation modules (100a, 100b, ...).

14. The distillation apparatus according to one of claims 7 to 13, wherein the plurality of distillation modules (100a, 100b, ...) are arranged as vertical stack or as a horizontal stack, wherein in the vertical stack the at least one opening (132) of the separation walls (130) are formed in a vertical upper portion of the first chambers (110).

15. A method for producing purified water (30) from a liquid (50) in a distillation module (100) according to one of claims 1 to 6, the method comprising:
feeding (S110) liquid in the first chamber (110) through the inlet (112);
heating (S120) the heat-coupling wall (114);
passing (S130) vapor through at least one opening (132) from the first chamber (110) to the second chamber (120);
cooling (S140) the vapor in the second chamber (120) by cooling the heat-sink wall (124); and
collecting (S150) condensed water as purified water (30) through the outlet (122) of the second chamber (120).
